(19) **Europäisches Patentamt**
**European Patent Office**
**Office européen des brevets**

(11) **EP 3 156 941 A1**

(12) **EUROPEAN PATENT APPLICATION**

(43) Date of publication:
**19.04.2017 Bulletin 2017/16**

(51) Int Cl.:
**G06K 9/62** *(2006.01)*

(21) Application number: **15189285.8**

(22) Date of filing: **12.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Siemens Aktiengesellschaft**
**80333 München (DE)**

(72) Inventor: **Ragunathan, Karthik**
**560068 Bangalore (IN)**

(74) Representative: **Patentanwaltskanzlei WILHELM & BECK**
**Prinzenstraße 13**
**80639 München (DE)**

(54) **SYSTEM, METHOD AND A COMPUTER PROGRAM PRODUCT FOR ANALYZING DATA**

(57) A method, a data analysis system (301), and a computer program product for analyzing data are provided. The data analysis system (301) generates a statistical data model (100), for example, a box plot comprising multiple data points (105) each representing one or more datums (107A) of a dataset (107), and classifying markers (101, 102), for example, whiskers, defining a cluster (106) of the data points (105). The data analysis system (301) designates each of the data points (105) inside the cluster (106) as an inlier data point (105A) and each of the data points outside the cluster (106) as an outlier data point (105B). The data analysis system (301) dynamically adapts the classifying markers (101, 102) based on a classifying marker adaption logic comprising verifying each outlier data point (105B) for its proximity, its frequency of occurrence, and its spread with respect to the inlier data points (105A).

FIG 5B

Printed by Jouve, 75001 PARIS (FR)

**Description**

The present invention relates to a method for analyzing data, comprising receiving a dataset, generating a statistical data model based on the received dataset, wherein the statistical data model comprises multiple data points each representing one or more datums of the dataset, and classifying markers defining a cluster of the data points, wherein each of the classifying markers is positioned at a predetermined distance from a lower quartile and an upper quartile of the dataset. The method further comprising designating each of the data points inside the cluster as an inlier data point and each of the data points outside the cluster as an outlier data point.

The present invention also relates to a data analysis system for analyzing data, comprising a data reception module for receiving a dataset, a model generation module for generating a statistical data model based on the received dataset, wherein the statistical data model comprises multiple data points each representing one or more datums of the dataset, and classifying markers defining a cluster of the data points, wherein each of the classifying markers is positioned at a predetermined distance from a lower quartile and an upper quartile of the dataset. The data analysis system further comprises a designation module for designating each of the data points inside the cluster as an inlier data point and each of the data points outside the cluster as an outlier data point.

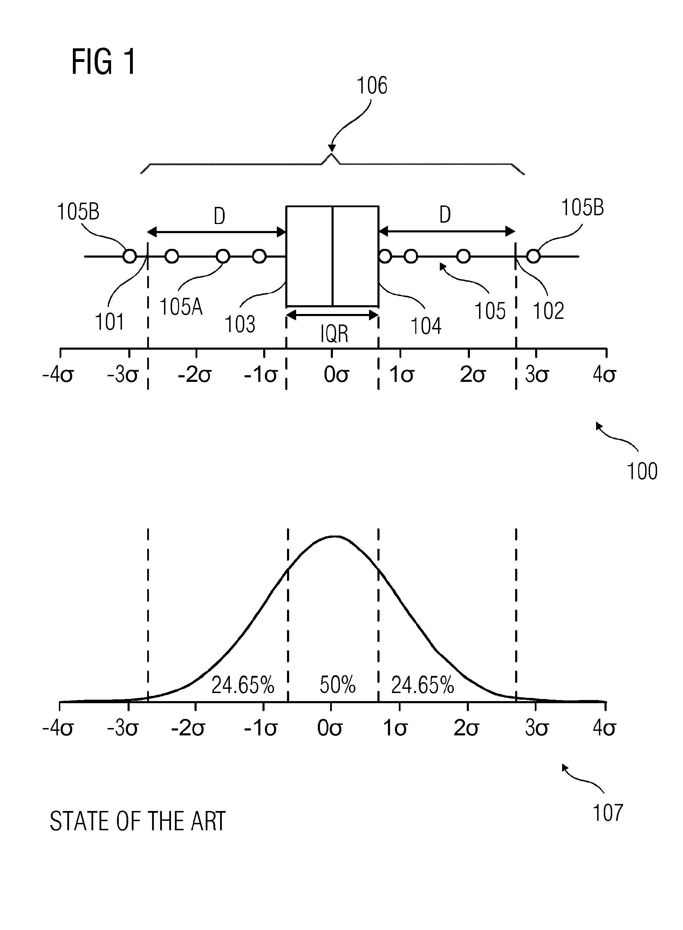

Such a method and system are known to a person skilled in the art. FIG 1 illustrates a statistical data model 100, also referred to as, a box plot 100, of the state of the art. The box plot 100 is a representation of a dataset 107 being analyzed. A box plot 100 comprises classifying markers 101 and 102 also referred to as whiskers 101, 102 that define a cluster 106 of data points 105 therebetween. The data points 105 inside the cluster 106 are inlier data points 105A and the data points 105 outside the cluster 106 are outlier data points 105B. The outlier data points 105B signify data that could have been erroneously recorded, for example, by a faulty sensor or due to faults during data acquisition. In a box plot 100, each of these classifying markers 101 and 102 are positioned at a predefined distance D from a lower quartile 103 and an upper quartile 104 respectively. The lower quartile 103 represents $25^{th}$ percentile of the dataset 107 and the upper quartile 104 represents $75^{th}$ percentile of the dataset 107. The distance D is determined based on an inter-quartile distance IQR between the lower quartile 103 and the upper quartile 104. The conventional box plot 100 generates a large number of false positives, that is, a large number of inlier data points 105A erroneously designated as outlier data points 105B typically for datasets 107 that do not follow normal distribution. Such erroneously marked outlier data points 105B when excluded from the cluster 106, cause unnecessary loss of useful data recorded by a sensor thereby affecting quality of the data analysis.

Therefore, it is an object of the present invention to provide a method and system of the aforementioned kind that are efficient in detecting the outlier data points.

The method and system according to the present invention achieve the aforementioned object by dynamically adapting the classifying markers based on a classifying marker adaption logic.

According to the present invention, a method employing a data analysis system comprising at least one processor configured to execute computer program instructions for analyzing data is provided. The data analysis system receives a dataset. As used herein, the term "dataset" refers to data that an electronic device, for example, a sensor records over a particular period of time. The dataset comprises multiple datums, each representing a recording of the electronic device at a particular time instant. The data analysis system generates a statistical data model based on the received dataset. As used herein, "statistical data model" refers to a data model representing the dataset. The statistical data model according to this invention is a box plot. The statistical data model comprises multiple data points each representing one or more datums of the dataset. As used herein "data point" is a unique representation of one or more datums having same value in the dataset but recorded at various time instants.

The statistical data model comprises classifying markers defining a cluster of the data points. As used herein, the term "cluster" refers to an area of the box plot comprising a set of data points, having its boundaries defined by the classifying markers. The classifying markers are also referred to as whiskers of a box plot. Each of the classifying markers is positioned at a predetermined distance from a lower quartile and an upper quartile of the dataset. As used herein, the term "lower quartile" refers to a $25^{th}$ percentile of the dataset. Also used herein, the term "upper quartile" refers to a $75^{th}$ percentile of the dataset. The predetermined distance is calculated based on an inter-quartile distance IQR, that is, a distance between the lower quartile and the upper quartile. For example, each of the classifying markers are positioned at 1.5(IQR) or 3(IQR) below the lower quartile and 1.5(IQR) or 3(IQR) above the upper quartile. In a preferred embodiment according to the present invention, the predetermined distance is so adjusted that each of the classifying markers are positioned on a nearest data point.

The data analysis system designates each of the data points inside the cluster as an inlier data point and each of the data points outside the cluster as an outlier data point. The data analysis system designates the data points, on which each of the classifying markers are positioned, as inlier data points. As used herein "inlier data point" refers to a data point positioned inside the cluster and representing acceptable data, for example, non-erroneous data recorded by a sensor. As used herein "outlier data point" refers to a data point positioned outside the cluster and representing non-acceptable, that is, erroneous data recorded by a sensor. The data analysis system dynamically adapts each of the classifying markers based on classifying marker adaption logic. As used herein, "dynamic adaption" refers to repositioning of the classifying markers with respect to the outlier data points so as to include one or more of the outlier data points in the cluster as inlier data points. The classifying markers are dynamically adapted for detection of data points that are falsely marked as outlier data points thereby enhancing quality of the data analysis.

The data analysis system employs the classifying marker adaption logic. The classifying marker adaption logic comprises determining an outlier distance of each outlier data point from its proximal classifying marker. As used herein, "outlier distance" represents proximity of an outlier data point with respect to its proximal classifying marker. For example, a relative difference in an initial position and a modified position of the classifying marker where the initial position is at the predetermined distance from the lower quartile or the upper quartile and the modified position is that of the outlier data point. The outlier distance is calculated based on a corresponding lower or upper quartile, the value of the outlier data point, and the inter-quartile distance. The classifying marker adaption logic then compares each outlier distance with a proximity threshold. As used herein, "proximity threshold" refers to a maximum variation between two inlier data points for a particular sensor recording the dataset. The proximity threshold is determined based on a reference range of the dataset received by the data analysis system. As used herein, "reference range" refers to a maximum range over which the dataset is expected to vary for a given sensor. This range therefore varies for each sensor.

In a preferred embodiment of the present invention, the classifying marker adaption logic determines a range of the dataset from datums of a minimum and a maximum value each and compares this range with the reference range received. If this range is less than or equal to the reference range then it is used for determining the proximity threshold. If the calculated range is greater than the reference range then the calculated range is capped to a value of the reference range. This comparison with the reference range is performed because if an extreme outlier data point is present then the calculated range would be very high and would therefore bias the proximity threshold towards including most of the outlier data points as inlier data points. Derivation of the range from the dataset itself and comparison of the range with the sensor specific reference range enables the data analysis system to preclude manual efforts required in fixing different boundary conditions for different sensors for outlier data detection.

The classifying marker adaption logic repositions, for each outlier data point, its proximal classifying marker to a position of the outlier data point, when the outlier distance is smaller than the proximity threshold. This comparison with the proximity threshold is performed based on a statistical characteristic of datasets that outlier data points are typically positioned far from the inlier data points. That is, data recorded erroneously typically has values that are not close to values of the acceptable data.

When the outlier distance is greater than the proximity threshold, the classifying marker adaption logic determines a frequency of occurrence of each of the datums. The classifying marker adaption logic then determines a datum with a maximum frequency of occurrence. In an embodiment according to the present invention, if the dataset is recorded using a high precision sensor, that is, the dataset comprises datums that are closely spaced then classifying marker adaption logic plots a histogram with multiple bins each representing a group of datums. The classifying marker adaption logic further determines a maximum frequency of one such group of datums. Each of the datums in this group is represented by inlier data points.

The classifying marker adaption logic determines for each of the datums represented by each outlier data point a frequency ratio of their frequency of occurrence and the maximum frequency of occurrence. The classifying marker adaption logic compares, for each outlier data point, the frequency ratio with a predefined frequency threshold. As used herein, "frequency threshold" refers to a value by which a frequency of occurrence of datums, representing acceptable data, can vary with respect to a datum having a maximum frequency of occurrence. The frequency threshold is predefined based on a statistical characteristic of datasets that a frequency of occurrence associated with an outlier data point is typically low as compared to that of an inlier data point. That is, erroneously recorded data is less repetitive compared to acceptable data. The classifying marker adaption logic repositions, for each outlier data point, its proximal classifying marker to a position of the outlier data point when its frequency ratio is greater than or equal to the predetermined frequency threshold.

When the frequency ratio is smaller than the predetermined frequency threshold, the classifying marker adaption logic determines a spread for each outlier data point as a number of outlier data points positioned at distance greater than that of each outlier data point from a proximal classifying marker. As used herein, the term "spread" of a particular outlier data point refers to a total number of outlier data points positioned beyond this particular outlier data point with respect to the proximal classifying marker. The classifying marker adaption logic compares this spread, for each outlier data point, with a predefined spread threshold. As used herein, "spread threshold" refers to a minimum number of outlier data points required to be positioned at a distance greater than that of a particular outlier data point from the proximal classifying marker for indicating a continuous trail of data recorded. The spread threshold is defined based on a statistical characteristic of datasets that erroneously recorded data lacks a continuous trail in probability distribution. The classifying marker adaption logic repositions, for each outlier data point, its proximal classifying marker to a position of the outlier data point having the spread greater than the predefined spread threshold.

When the spread of an outlier data point is lesser than the predefined spread threshold, the classifying marker adaption logic generates, for each outlier data point, an auxiliary statistical data model of a subset of the received dataset. The subset comprises a predefined number of datums positioned proximal to a datum represented by such an outlier data point. This proximity is in terms of a time instant at which each of the datums are recorded. For example, the subset comprises datums recorded for a predefined time previous to and after the datum represented by an outlier data point. The auxiliary statistical data model comprises auxiliary classifying markers defining an auxiliary cluster of data points representing one or more datums in the subset. Each of the auxiliary classifying markers is positioned at a predetermined distance from an auxiliary lower quartile and an auxiliary upper quartile of the subset. In a preferred embodiment according to the present invention this predetermined distance is 3(IQR) where IQR is the inter-quartile distance between the auxiliary lower quartile and the auxiliary upper quartile of the subset.

The classifying marker adaption logic, for each outlier data point, repositions its proximal classifying marker to a position of the outlier data point in the statistical data model, when the auxiliary cluster comprises the outlier data point. That is, the classifying markers are repositioned when the auxiliary cluster includes an outlier data point of the dataset as an inlier data point of the subset. The data analysis system thus increases accuracy of detection of outlier data points by employing the classifying marker adaption logic which takes into account various statistical characteristics of datasets.

According to the present invention also disclosed is a computer program product comprising a non-transitory computer readable storage medium storing computer program codes that comprise instructions executable by at least one processor for performing the method disclosed above for analyzing data.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1        illustrates a statistical data model of the state of the art.

FIG 2        is a process flowchart illustrating a method for analyzing data.

FIG 3        illustrates a data analysis system for analyzing data.

FIG 4        is a block diagram illustrating an architecture of a computer system employed by the data analysis system for analyzing data.

FIGS 5A-5E   illustrate steps of analyzing data in a dataset using the data analysis system illustrated in FIG 3.

Various embodiments are described with reference to the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

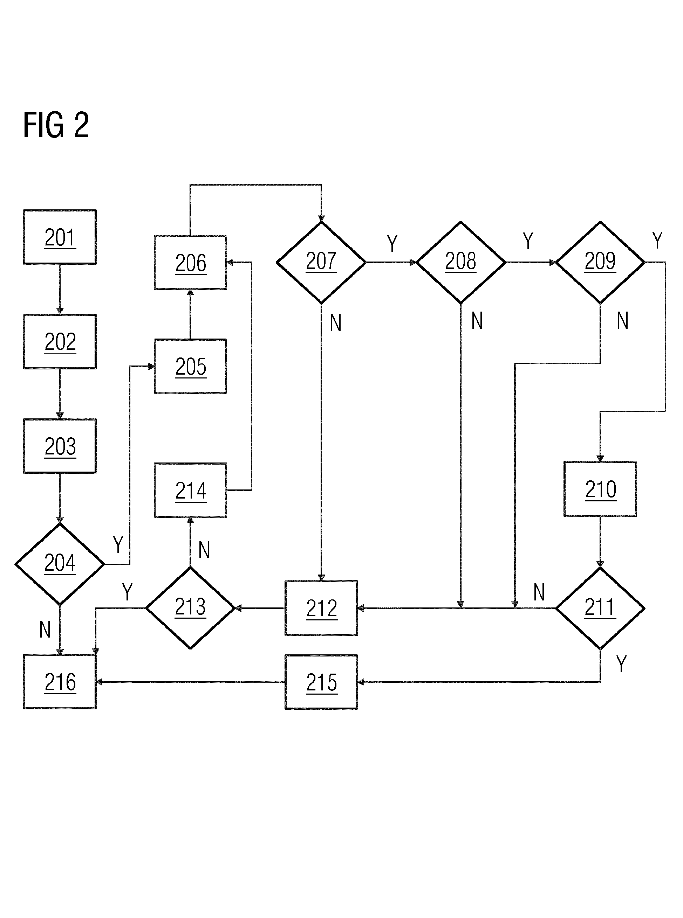

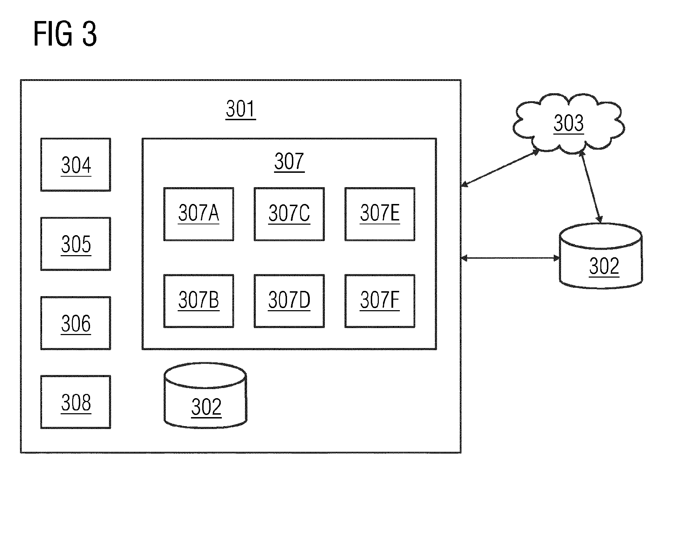

FIG 2 is a process flowchart illustrating a method for analyzing data. The method disclosed herein employs a data analysis system illustrated in FIG 3, comprising at least one processor configured to execute computer program instructions for analyzing data. The data analysis system receives 201 a dataset 107. This dataset 107 comprises multiple datums recorded by an electronic device, for example, a sensor. The data analysis system receives this dataset 107 from the electronic device. The data analysis system generates 202 a statistical data model 100 illustrated in FIG 1 based on the received dataset 107. The statistical data model 100 comprises multiple data points 105, each representing one or more datums of the dataset 107. The statistical data model 100 also comprises classifying markers 101, 102 defining a cluster 106 of the data points 105. Each of the classifying markers 101, 102 is positioned at a predetermined distance D from a lower quartile 103 and an upper quartile 104 of the dataset 107. The data analysis system designates 203 each of the data points 105 inside the cluster 106 as an inlier data point 105A and each of the data points 105 outside the cluster as an outlier data point 105B. The data analysis system dynamically adapts the classifying markers 101, 102 based on classifying marker adaption logic. For implementing the classifying marker adaption logic, the data analysis system checks 204 whether any outlier data points 105B are present in the statistical data model 100. If not, then the data analysis system ends 216 the process. If yes, then the data analysis system considers one of the two classifying markers 101 and 102, for example, the classifying marker 101 and outlier data points 105B positioned proximal to this classifying marker 101 for implementing the classifying marker adaption logic. The data analysis system initializes 205 a counter to 1 and considers the first outlier data point 105B positioned proximal to the classifying marker 101. This counter represents the number of outlier data points 105B being processed using the classifying marker adaption logic. The data analysis system determines 206 an outlier distance of this outlier data point 105B from the proximal classifying marker 101. The data analysis system compares, that is, checks 207 if this absolute value of the outlier distance is lesser than or equal to a proximity threshold determined based on a reference range of the dataset 107 received by the data analysis system. The data analysis system calculates a range of the received dataset 107 and compares this range with the reference range received. If the calculated range is less than the reference range, the calculated range is used in determining the proximity threshold. If the calculated range is greater than the reference range, the reference range is used as a capping value. The data analysis system determines the proximity threshold IQR_Dist based on an interquartile distance IQR between the lower quartile 103 and the upper quartile 104 and the range of the dataset 107, using the following formula:

$$IQR\_Dist = 0.1(Range)/IQR$$

The proximity threshold IQR_Dist if less than 1 is rounded off to be equal to 1. If the outlier distance is lesser than or equal to the proximity threshold IQR_Dist, the data analysis system repositions 212 the proximal classifying marker 101 to a position of the outlier data point 105B to include this outlier data point 105B as an inlier data point 105A inside the cluster 106.

If the absolute value of the outlier distance is greater than the proximity threshold IQR_Dist, the data analysis system determines a frequency of occurrence of each of the datums in the dataset 107 and determines a datum with a maximum frequency of occurrence. The data analysis system determines for each of the datums represented by the outlier data point 105B a frequency ratio of their frequency of occurrence and the maximum frequency of occurrence. The data analysis system compares, that is, checks 208 if this frequency ratio is greater than or equal to the predefined frequency threshold. The predefined frequency threshold is, for example, 50%, that is, the frequency of occurrence of the datums represented by the outlier data point 105B is required to be greater than or equal to 50% of the maximum frequency of occurrence in order for the outlier data point 105B to qualify as an inlier data point 105A. If this frequency ratio is greater than or equal to 50%, the data analysis system repositions 212 the classifying marker 101 to a position of the outlier data point 105B, to include this outlier data point 105B as an inlier data point 105A inside the cluster 106.

If the frequency ratio is smaller than 50%, the data analysis system determines a spread for the outlier data point 105B as a number of outlier data points 105B positioned at a distance greater than that of the outlier data point 105B from the proximal classifying marker 101. The data analysis system compares, that is, checks 209 whether the spread is greater than or equal to a predefined spread threshold. The predefined spread threshold is, for example, 50, that is, at least 50 outlier data points 105B are required to be positioned at a distance greater than that of the outlier data point 105 from the classifying marker 101 in order to include the outlier data point 105B as an inlier data point 105A. If the spread of the outlier data point 105B is greater than or equal to 50, the data analysis system repositions 212 the classifying marker 101 to a position of the outlier data point 105B, to include this outlier data point 105B as an inlier data point 105A inside the cluster 106.

If the spread is lesser than 50, the data analysis system generates 210 an auxiliary statistical data model of a subset of the received dataset 107. The data analysis system generates this subset from a predefined number of datums positioned proximal, for example, in time domain, to the datum or datums represented by the outlier data point 105. This predefined number of datums changes dynamically with respect to a total number of the outlier data points 105B. For example, if there are 10 outlier data points 105B present proximal to one another in time domain, then the predefined number is considered to be twice the number of outlier data points 105B. That is, 20 datums recorded before and after the datum represented by the outlier data point 105B are included in the subset. The auxiliary statistical data model comprises auxiliary classifying markers defining an auxiliary cluster of data points 105 representing one or more of the datums in the subset. The data analysis system checks 211 whether the outlier data point 105B is inside the auxiliary cluster. If the outlier data point 105B is inside the auxiliary cluster, the data analysis system repositions 212 the proximal classifying marker 101 to a position of the outlier data point 105B in the statistical data model 100.

If the outlier data point 105B lies outside the auxiliary cluster then the data analysis system designates 215 the datum or datums represented by this outlier data point 105B and all the outlier data points 105B positioned beyond, as erroneous data and ends 216 the process. After repositioning 212 the classifying marker 101 the data analysis system checks 213 if the counter equals total number of outlier data points 105B. If yes, then the data analysis system ends 216 the process. If not, the counter is incremented 214 by 1 and the next outlier data point 105B is iteratively processed from step 206 to step 216. The classifying marker adaption logic is reiterated for other classifying marker 102 and each of the outlier data points 105B positioned proximal to this classifying marker 102.

FIG 3 illustrates a data analysis system 301 for analyzing data. The data analysis system 301 according to the present invention, is installed on and accessible by a user device, for example, a personal computing device, a workstation, a client device, a network enabled computing device, any other suitable computing equipment, and combinations of multiple pieces of computing equipment. The data analysis system 301 disclosed herein is in operable communication with a database 302 over a communication network 303. The database 302 is, for example, a structured query language (SQL) data store or a not only SQL (NoSQL) data store. In an embodiment of the database 302 according to the present invention, the database 302 can also be a location on a file system directly accessible by the data analysis system 301. In another embodiment of the database 302 according to the present invention, the database 302 is configured as cloud based database implemented in a cloud computing environment, where computing resources are delivered as a service over the network 303. As used herein, "cloud computing environment" refers to a processing environment comprising configurable computing physical and logical resources, for example, networks, servers, storage, applications, services, etc., and data distributed over the network 303, for example, the internet. The cloud computing environment provides on-demand network access to a shared pool of the configurable computing physical and logical resources. The communication network 303 is, for example, a wired network, a wireless network, a communication network, or a network formed from any combination of these networks.

In a preferred embodiment according to the present invention, the data analysis system 301 is downloadable and usable on the user device. In another embodiment according to the present invention, the data analysis system 301 is configured as a web based platform, for example, a website hosted on a server or a network of servers. In another embodiment according to the present invention, the data analysis system 301 is implemented in the cloud computing environment. The data analysis system 301 is developed, for example, using Google App engine cloud infrastructure of Google Inc., Amazon Web Services® of Amazon Technologies, Inc., the Amazon elastic compute cloud EC2® web service of Amazon Technologies, Inc., the Google® Cloud platform of Google Inc., the Microsoft® Cloud platform of Microsoft Corporation, etc. In an embodiment, the data analysis system 301 is configured as a cloud computing based platform implemented as a service for analyzing data.

The data analysis system 301 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 304, 305, 306, 307, etc., of the data analysis system 301. The processor is configured to execute the defined computer program instructions. As illustrated in FIG 3, the data analysis system 301 comprises a graphical user interface (GUI) 308. A user using the user device can access the data analysis system 301 via the GUI 308. The GUI 308 is, for example, an online web interface, a web based downloadable application interface, etc. The data analysis system 301 further comprises a data reception module 304, a model generation module 305, a designation module 306, and an adaption module 307.

The data reception module 304 receives a dataset 107, for example, from a cloud storage storing data recorded by a sensor. The model generation module 305 generates a statistical data model 100 illustrated in FIG 1 based on the received dataset 107. The statistical data model 100 comprises multiple data points 105 each representing one or more datums of the dataset 107, and classifying markers 101, 102 defining a cluster 106 of the data points 105. Each of the classifying markers 101, 102 is positioned at a predetermined distance from a lower quartile 103 and an upper quartile 104 of the dataset 107. The designation module 306 designates each of the data points 105 inside the cluster 106 as an inlier data point 105A and each of the data points outside the cluster 106 as an outlier data point 105B. The adaption module 307 dynamically adapts the classifying markers 101, 102. The adaption module 307 comprises an outlier distance determination module 307A, a comparison module 307B, a marker modification module 307C, a threshold determination module 307D, a frequency determination module 307E, and a spread determination module 307F.

The outlier distance determination module 307A determines an outlier distance of each outlier data point 105B from its proximal classifying marker 101 or 102. The comparison module 307B compares each outlier distance with a proximity threshold IQR_Dist. The threshold determination module 307D determines the proximity threshold IQR_Dist based on a reference range of the dataset 107 received by the data reception module 304. The threshold determination module 307D compares this reference range to a range derived using the minimum and maximum valued datums of the dataset 107 and considers the reference range as a capping value in case the derived range exceeds the reference range. The marker modification module 307C repositions, for each outlier data point 105B, its proximal classifying marker 101, 102 to a position of the outlier data point 105B, when the outlier distance is smaller than the proximity threshold IQR_Dist.

When the outlier distance of one or more outlier data points 105B is greater than the proximity threshold IQR_Dist, the frequency determination module 307E determines a frequency of occurrence of each of the datums and determines a datum with a maximum frequency of occurrence. The frequency determination module 307E further determines for each of the datums represented by each of the outlier data points 105B a frequency ratio in their frequency of occurrence and the determined maximum frequency of occurrence. The comparison module 307B compares the frequency ratio for each outlier data point 105B with a predefined frequency threshold. The marker modification module 307C repositions, for each outlier data point 105B, its proximal classifying marker 101, 102 to a position of the outlier data point 105B when its frequency ratio is greater than or equal to the predetermined frequency threshold.

When the frequency ratio for one or more outlier data points 105B is lesser than the predetermined frequency threshold, the spread determination module 307F determines a spread for each outlier data point 105B as a number of outlier data points 105B positioned at distance greater than that of each of the outlier data points 105B from a proximal classifying marker 101, 102. The comparison module 307B compares the spread with a predefined spread threshold. The marker modification module 307C repositions, for each outlier data point 105B, the proximal classifying marker 101, 102 to a position of the outlier data point 105B having its spread greater than the predefined spread threshold.

When the spread for one or more outlier data points 105B is lesser than the predefined spread threshold, the model generation module 307C generates for each outlier data point 105 an auxiliary statistical data model of a subset of the received dataset 107. The subset comprises a predefined number of datums positioned proximal, for example, in time domain, to one or more datums represented by the outlier data point 105B. The auxiliary statistical data model comprises auxiliary classifying markers defining an auxiliary cluster of data points 105 representing one or more of the datums in the subset. The marker modification module 307C repositions, for each outlier data point 105B, its proximal classifying marker 101, 102 to a position of the outlier data point 105B in the statistical data model 100 when the auxiliary cluster comprises the outlier data point 105.

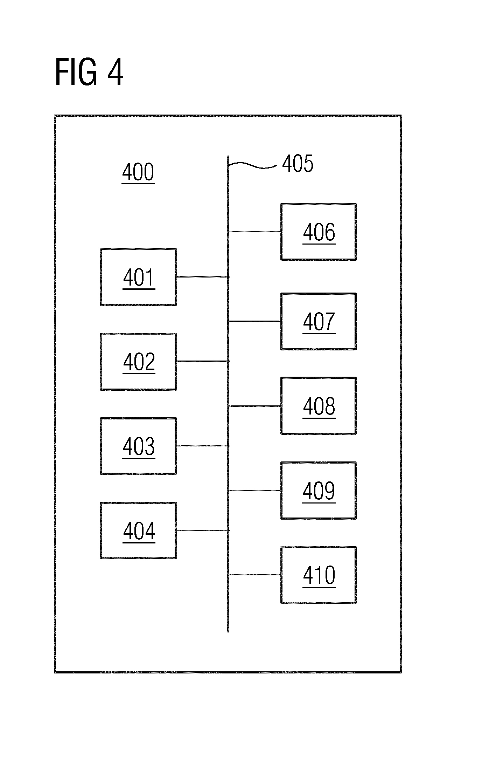

FIG 4 is a block diagram illustrating an architecture of a computer system 400 employed by the data analysis system 301 illustrated in FIG 3, for analyzing data. The data analysis system 301 employs the architecture of the computer system 400 illustrated in FIG 4. The computer system 400 is programmable using a high level computer programming language. The computer system 400 may be implemented using programmed and purposeful hardware. As illustrated in FIG 4, the computer system 400 comprises a processor 401, a non-transitory computer readable storage medium such as a memory unit 402 for storing programs and data, an input/output (I/O) controller 403, a network interface 404, a data bus 405, a display unit 406, input devices 407, a fixed media drive 408 such as a hard drive, a removable media drive 409 for receiving removable media, output devices 410, etc. The processor 401 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 401 may also be implemented as a processor set comprising, for example, a general purpose microprocessor and a math or graphics co-processor. The processor 401 is selected, for example, from the Intel® processors, Advanced Micro Devices (AMD®) processors, International Business Machines (IBM®) processors, etc. The data analysis system 301 disclosed herein is not limited to a computer system 400 employing a processor 401. The computer system 400 may also employ a controller or a microcontroller. The processor 401 executes the modules, for example, 304, 305, 306, 307, etc., of the data analysis system 301.

The memory unit 402 is used for storing programs, applications, and data. For example, the data reception module 304, the model generation module 305, the designation module 306, the adaption module 307, etc., of the data analysis system 301 are stored in the memory unit 402 of the computer system 400. The memory unit 402 is, for example, a random access memory (RAM) or another type of dynamic storage device that stores information and instructions for execution by the processor 401. The memory unit 402 also stores temporary variables and other intermediate information used during execution of the instructions by the processor 401. The computer system 400 further comprises a read only memory (ROM) or another type of static storage device that stores static information and instructions for the processor 401. The I/O controller 403 controls input actions and output actions performed by the data analysis system 301.

The network interface 404 enables connection of the computer system 400 to the network 303. For example, the data analysis system 301 connects to the network 303 via the network interface 404. In an embodiment, the network interface 404 is provided as an interface card also referred to as a line card. The network interface 404 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 405 permits communications between the modules, for example, 304, 305, 306, 307, 308, etc., of data analysis system 301.

The display unit 406, via the graphical user interface (GUI) 308, displays information such as the statistical data model, user interface elements such as text fields, buttons, windows, etc., for allowing a user to provide his/her inputs such as the reference range, etc., for analyzing data. The display unit 406 comprises, for example, a liquid crystal display, a plasma display, an organic light emitting diode (OLED) based display, etc. The input devices 407 are used for inputting data into the computer system 400. The input devices 407 are, for example, a keyboard such as an alphanumeric keyboard, a touch sensitive display device, and/or any device capable of sensing a tactile input.

Computer applications and programs are used for operating the computer system 400. The programs are loaded onto the fixed media drive 408 and into the memory unit 402 of the computer system 400 via the removable media drive 409. In an embodiment, the computer applications and programs may be loaded directly via the network 303. Computer applications and programs are executed by double clicking a related icon displayed on the display unit 406 using one of the input devices 407. The output devices 410 output the results of operations performed by the data analysis system 301. For example, the data analysis system 301 provides graphical data analysis results using the statistical data model 100 and the auxiliary statistical data model, using the output devices 410.

The processor 401 executes an operating system, for example, the Linux® operating system, the Unix® operating system, any version of the Microsoft® Windows® operating system, the Mac OS of Apple Inc., the IBM® OS/2, etc. The computer system 400 employs the operating system for performing multiple tasks. The operating system is responsible for management and coordination of activities and sharing of resources of the computer system 400. The operating system further manages security of the computer system 400, peripheral devices connected to the computer system 400, and network connections. The operating system employed on the computer system 400 recognizes, for example, inputs provided by the senders using one of the input devices 407, the output display, files, and directories stored locally on the fixed media drive 408. The operating system on the computer system 400 executes different programs using the processor 401. The processor 401 and the operating system together define a computer platform for which application programs in high level programming languages are written.

The processor 401 of the computer system 400 employed by the data analysis system 301 retrieves instructions defined by the data reception module 304, the model generation module 305, the designation module 306, the adaption module 307, etc., of the data analysis system 301 for performing respective functions disclosed in the detailed description of FIG 3. The processor 401 retrieves instructions for executing the modules, for example, 304, 305, 306, 307, etc., of the data analysis system 301 from the memory unit 402. A program counter determines the location of the instructions in the memory unit 402. The program counter stores a number that identifies the current position in the program of each of the modules, for example, 304, 305, 306, 307, etc., of the data analysis system 301. The instructions fetched by the processor 401 from the memory unit 402 after being processed are decoded. The instructions are stored in an instruction register in the processor 401. After processing and decoding, the processor 401 executes the instructions, thereby performing one or more processes defined by those instructions.

At the time of execution, the instructions stored in the instruction register are examined to determine the operations to be performed. The processor 401 then performs the specified operations. The operations comprise arithmetic operations and logic operations. The operating system performs multiple routines for performing a number of tasks required to assign the input devices 407, the output devices 410, and memory for execution of the modules, for example, 304, 305, 306, 307, etc., of the data analysis system 301. The tasks performed by the operating system comprise, for example, assigning memory to the modules, for example, 304, 305, 306, 307, etc., of the data analysis system 301, and to data used by the data analysis system 301, moving data between the memory unit 402 and disk units, and handling input/output operations. The operating system performs the tasks on request by the operations and after performing the tasks, the operating system transfers the execution control back to the processor 401. The processor 401 continues the execution to obtain one or more outputs. The outputs of the execution of the modules, for example, 304, 305, 306, 307, etc., of the data analysis system 301 are displayed to the user on the GUI 308.

For purposes of illustration, the detailed description refers to the data analysis system 301 being run locally on the computer system 400; however the scope of the present invention is not limited to the data analysis system 301 being run locally on the computer system 400 via the operating system and the processor 401, but may be extended to run remotely over the network 303 by employing a web browser and a remote server, a mobile phone, or other electronic devices. One or more portions of the computer system 400 may be distributed across one or more computer systems (not shown) coupled to the network 303.

Disclosed herein is also a computer program product comprising a non-transitory computer readable storage medium that stores computer program codes comprising instructions executable by at least one processor 401 for analyzing data as disclosed in the present invention. In an embodiment, a single piece of computer program code comprising computer executable instructions performs one or more steps of the method according to the present invention, for analyzing data. The computer program codes comprising computer executable instructions are embodied on the non-transitory computer readable storage medium. The processor 401 of the computer system 400 retrieves these computer executable instructions and executes them. When the computer executable instructions are executed by the processor 401, the computer executable instructions cause the processor 401 to perform the steps of the method for analyzing data.

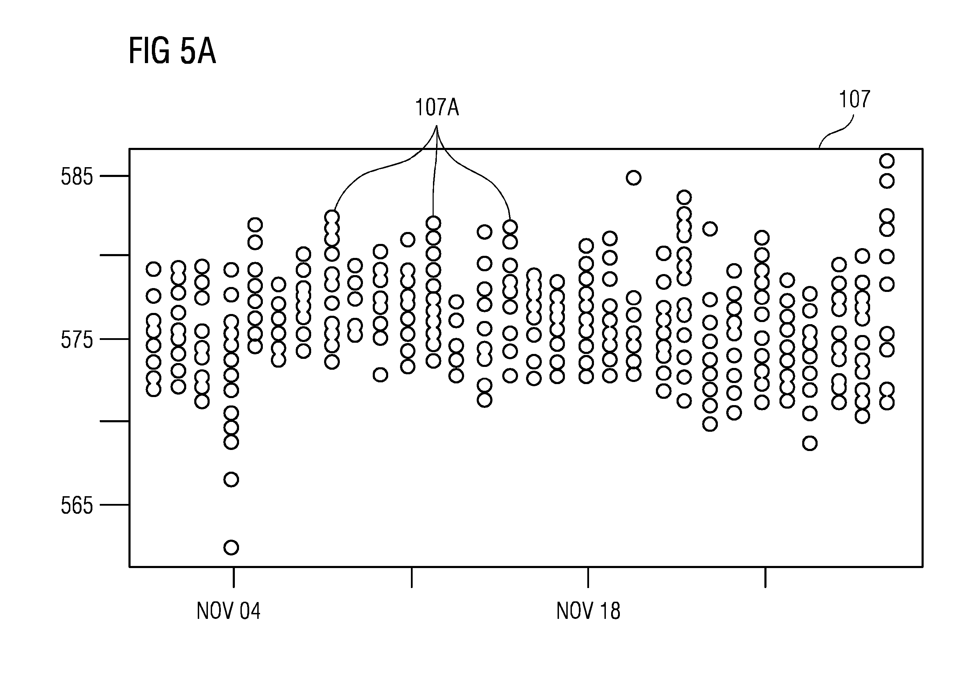

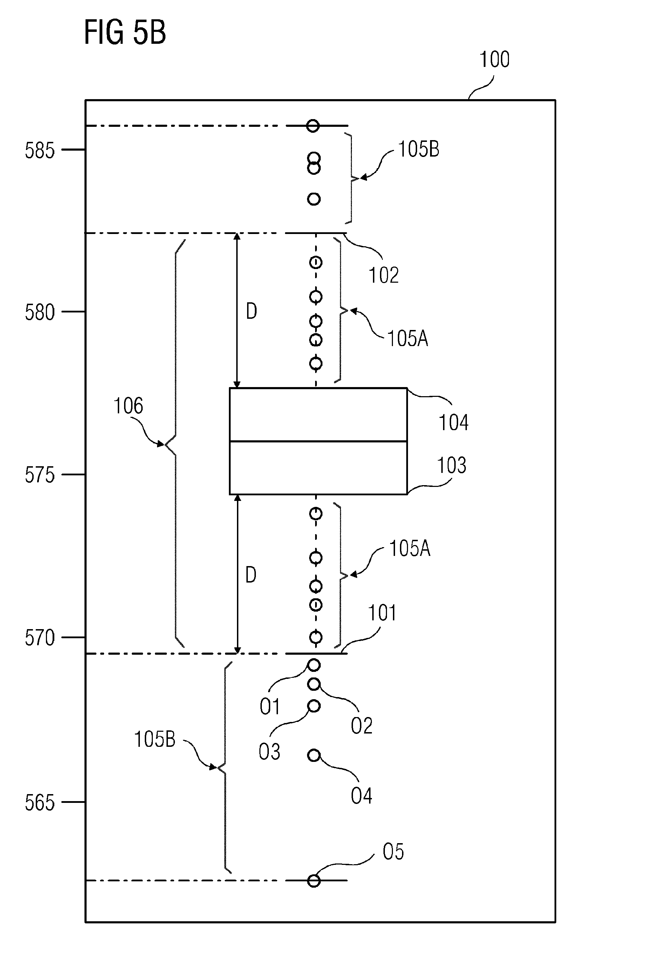

FIGS 5A-5E illustrate steps of analyzing data in a dataset 107 illustrated in FIG 5A, using the data analysis system 301 illustrated in FIG 3. FIG 5A illustrates a dataset 107 comprising multiple datums 107A, that the data analysis system 301 receives. Each of the datums 107A of this dataset 107 represent exhaust temperature recorded by a temperature sensor in the month of November in a gas turbine power plant. As illustrated in FIG 5A, the X axis represents time instants and Y axis represents temperatures in degree Celsius. FIG 5B illustrates a statistical data model 100, that is, a box plot 100 that the data analysis system 301 generates based on the dataset 107. The box plot 100 comprises multiple data points 105, each representing one or more datums 107A of the dataset 107. The box plot 100 comprises classifying markers, that is, whiskers 101 and 102 defining a cluster 106 of the data points 105. Each of the whiskers 101 and 102 is positioned at a predetermined distance D from a lower quartile 103 and an upper quartile 104 respectively, of the dataset 107. The distance D is calculated as a product of a constant number with an inter-quartile distance IQR between each of the quartiles 103 and 104, using a standard formula given below:

$$D = [1.5 * (IQR)]$$

On calculating the distance D, the data analysis system 301 adjusts the value of distance D such that the positions of each of the whiskers 101 or 102 coincide with positions of their respective nearest data points 105. The data analysis system 301 designates the data points 105 inside the cluster 106 as inlier data points 105A and those outside the cluster 106 as outlier data points 105B and applies classifying marker adaption logic to each of the outlier data points 105B for dynamically adapting the whiskers 101 and 102. The classifying marker adaption logic is first applied to one side of the box plot 100, that is, to the outlier data points 105B positioned proximal to whisker 101. As illustrated in FIG 5B, five outlier data points 105B namely O1, 02, 03, 04, and 05 are positioned proximal to the whisker 101.

Assume that the inter-quartile distance IQR is 3.25 and the values of boundaries of the dataset 107, that is, values of a minimum datum 107A and a maximum datum 107A are 585.63 degree Celsius and 562.31 degree Celsius respectively. Therefore, the range of the dataset is (585.63-562.31) = 23.3. Assume that the reference range received is 600 degrees Celsius, therefore as 23.3 is less than 600, this range of 23.3 is used for determining the proximity threshold IQR_Dist. The proximity threshold IQR_Dist is [(0.1*range)/IQR] = [(0.1*23.3)/3.25] = 0.72. The value of IQR_Dist is rounded off to 1 in case it is lesser than 1, since very low values of IQR_Dist makes the method sensitive to changes in outlier distances and therefore in a high number of false positives.

Assume that the lower quartile 103 of the dataset 107 is positioned at 574.36 degree Celsius. The distanced D can be calculated using the formula given above as 1.5(IQR) = 1.5*3.25 = 4.875.

Consider the whisker 101 when positioned at its initial predetermined distance D of 4.875 from the lower quartile 103 is referred to as a basewhisker. Therefore, the basewhisker 101 is positioned at 574.36-4.875 = 569.725. However, the nearest inlier data point 105A is 569.58 degree Celsius. Therefore, the position of the basewhisker 101 is adjusted to coincide with this inlier data point 105A at 569.58, from 569.725. Assume that the outlier data points O1, 02, 03, 04, and 05 are each positioned at outlier distances OD1, OD2, OD3, OD4, and OD5 from the basewhisker 101 respectively. The outlier distance OD1 is calculated using the formula given below:

$$OD1 = |whisker(O1) - Value(basewhisker)|$$

Where, the whisker(O1) when positioned proximal to lower quartile 103 is calculated using the formula given below:

$$whisker(O1) = [\text{lower quartile} - \text{value}(O1)]/IQR$$

And the whisker(O1) when positioned proximal to upper quartile 104 is calculated using the formula given below:

$$whisker(O1) = [\text{value}(O1) - \text{upper quartile}]/IQR$$

Also, Value(basewhisker) which is proximal to the lower quartile is calculated using the formula given below:

$$Value(basewhisker) = [\text{lower quartile} - \text{value}(\text{base inlier data point})]/IQR$$

Where base inlier data point 105A is the data point with which the basewhisker's 101 position coincides. Therefore, Value(basewhisker) = [574.36-569.58]/3.25 = 1.47. Assume, whisker(O1) = 1.57, whisker(O2) = 1.67, whisker(O3) = 1.77, whisker(O4) = 2.45 and whisker(O5) = 3.71. The data analysis system 301 checks if the outlier distance OD1 = [1.57-1.47] = 0.1 is lesser than or equal to the proximity threshold IQR_Dist=1. For OD1 the output of the comparison is true therefore the basewhisker 101 is repositioned from its initial position of 569.58 degree Celsius to the position of O1. The data analysis system 301 checks if the outlier distance OD2 of 02 from the repositioned basewhisker 101 is less than or equal to the proximity threshold IQR_Dist=1. Outlier distance OD2 = [1.67-1.57] = 0.1. Thus the output of the comparison is again true and the basewhisker 101 is again moved to the position of 02 from O1. Similarly for 03 and 04, the outlier distances OD1 and OD2 are [1.77-1.67]=0.1 and [2.45-1.77]=0.68 and therefore the basewhisker 101 is moved from O2's position to O3's position and from O3's position to O4's position.

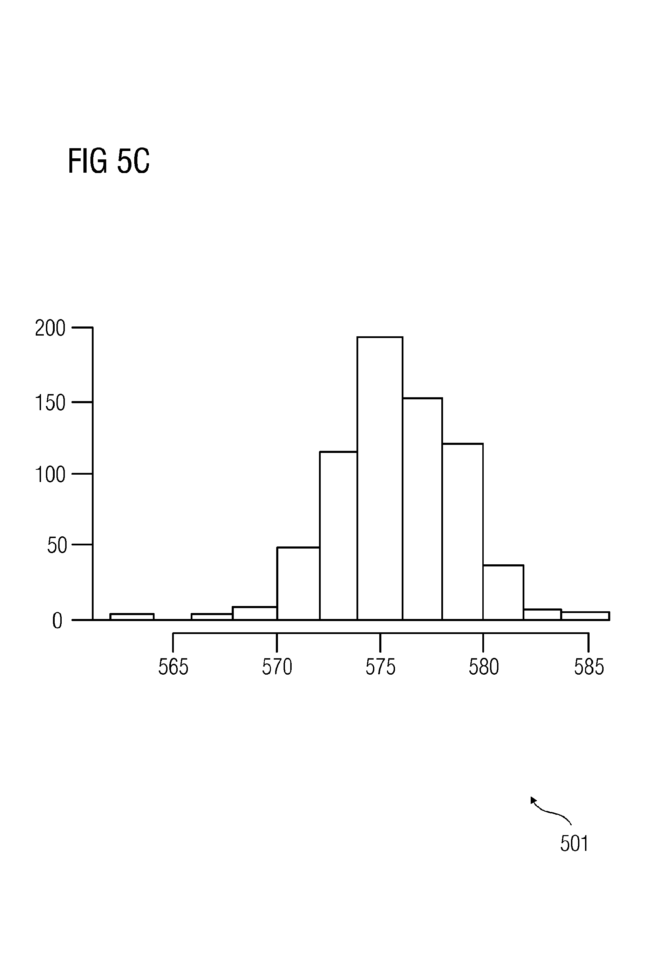

For outlier data point 05, the outlier distance OD5 is [3.71-2.45] = 1.26 which is greater than the proximity threshold IQR_Dist = 1. Since the outlier distance OD5 is not lesser than or equal to the proximity threshold IQR_Dist, the data analysis system 301 determines a frequency of occurrence of each of the datum/datums 107A represented by 05 and a maximum frequency of occurrence of a datum/datums 107A represented by an inlier data point 105, by plotting a histogram 501 as illustrated in FIG 5C. Since the dataset 107 comprises datums 107A closely spaced to one another, the histogram 501 comprises bins representing group of the datums 107A on X axis and corresponding frequencies of occurrence of each such group on Y axis. The maximum frequency of occurrence is therefore of a group of datums 107A.

The maximum frequency of occurrence is 200, that is, there are 200 datums 107A in the dataset 107 that have values in this group and are represented by inlier data points 105A. Also, the frequency of occurrence associated with the outlier datapoint 05 is 1, that is, 05 represents only one datum 107A in the dataset 107. The data analysis system 301 determines a frequency ratio for 05 = 1/228 = 0.004 = 0.4% and compares this with a predetermined frequency threshold of 50% to check if the frequency ratio is greater than or equal to the frequency threshold. Since the comparison's output result is false, that is, the frequency of occurrence associated with the outlier data point 05 is less than 50% of the maximum frequency of occurrence, the data analysis system 301 determines the spread of 05, that is, a total number of outlier data points 105B positioned beyond 05 and away from the whisker 101. As there are no outlier data points 105B present beyond 05, the spread of 05 is 0. The data analysis system 301 compares this spread with the spread threshold = 50 to check if the spread is greater than or equal to the spread threshold.

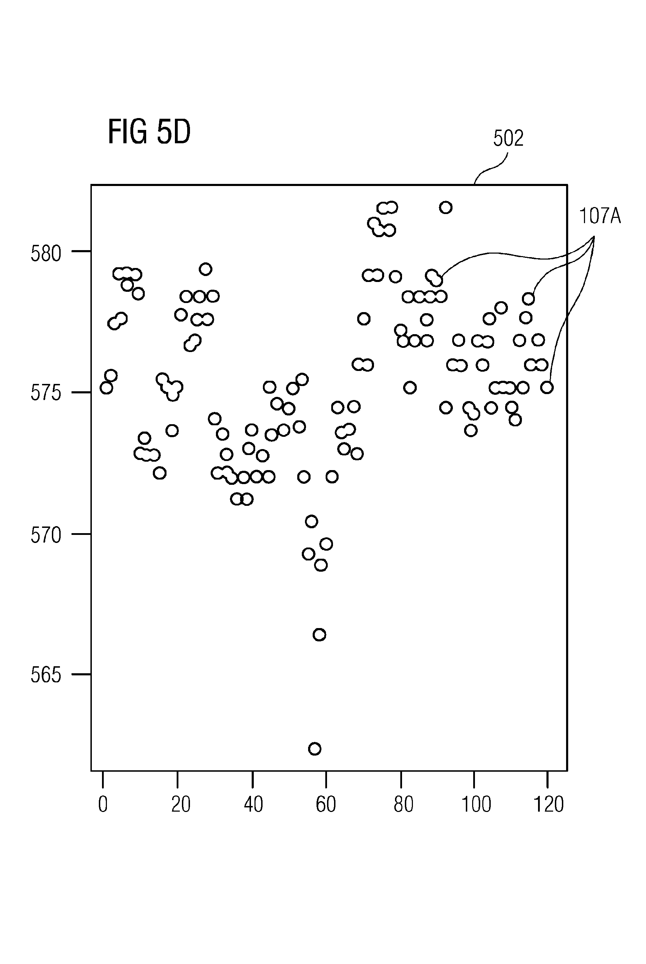

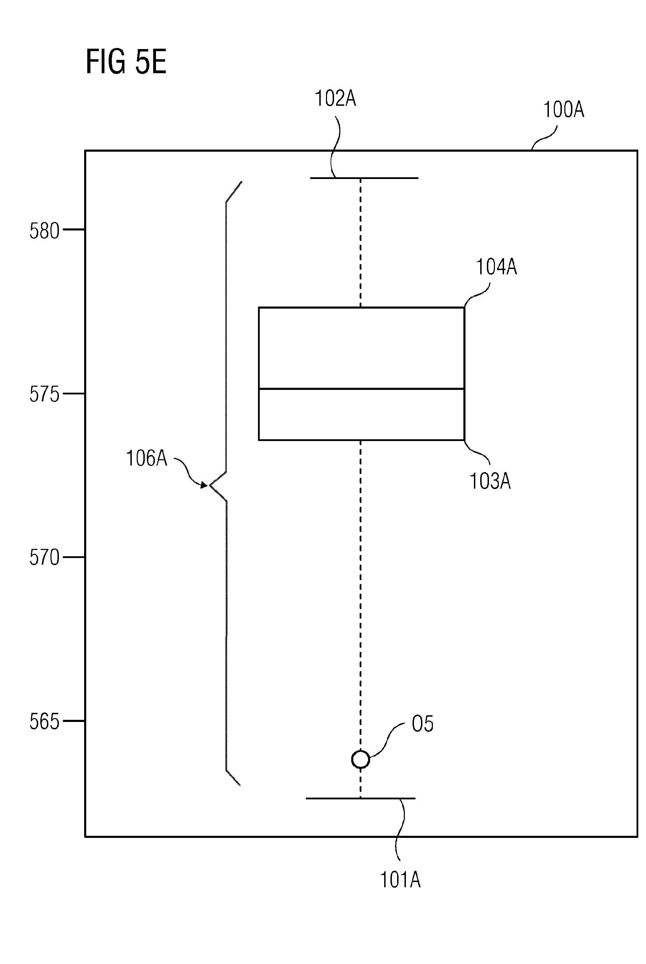

Since the output of the comparison is false, the data analysis system 301 generates a subset 502 of the dataset 107 as illustrated in FIG 5D, comprising datums 107A positioned proximal, time domain, to the datum 107A represented by 05. As illustrated in FIG 5D, the X axis represents time instant values, for example, if the datum 107A represented by 05 is recorded at time instant T1 then the subset 502 comprises datums 107A recorded in a time range starting 60 minutes before and ending 60 minutes after T1. The data analysis system 301 generates an auxiliary box plot 100A as illustrated in FIG 5E with auxiliary whiskers 101A and 102A defining an auxiliary cluster 106A. The whiskers 101A and 102A are positioned at a predetermined distance D = 3(IQR) from the auxiliary lower quartile 103A and the auxiliary upper quartile 104A of the subset 502, where IQR is the inter-quartile distance between the auxiliary lower quartile 103A and the auxiliary upper quartile 104A. As shown in FIG 5E, the outlier data point 05 is positioned inside the auxiliary cluster 106A and is therefore qualifies as an inlier data point 105A of the dataset 107. The data analysis system 301 then repositions the basewhisker 101 to O5's position from O4's position in the box plot 100. Thus, each of the outlier data points 105B namely O1, 02, 03, 04, and 05 represent non-erroneous datums 107A. Thus, the classifying marker adaption logic employed by the data analysis system 301 reduces the number of false positives by efficiently validating outlier data points 105B.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the database 302, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

## Claims

1. A method for analyzing data, said method employing a data analysis system (301) comprising at least one processor (401) configured to execute computer program instructions for performing said method, said method comprising:

   receiving a dataset (107);
   generating a statistical data model (100) based on said received dataset (107), said statistical data model (100) comprising a plurality of data points (105) each representing one or more datums (107A) of said dataset (107), and classifying markers (101, 102) defining a cluster (106) of said data points (105), each of said classifying markers (101, 102) positioned at a predetermined distance from a lower quartile (103) and an upper quartile (104) of said dataset (107);
   designating each of said data points (105) inside said cluster (106) as an inlier data point (105) and each of said data points (105) outside said cluster as an outlier data point (105);

   said method **characterized by**:

   dynamically adapting said classifying markers (101, 102) based on a classifying marker adaption logic.

2. The method of claim 1, wherein said classifying marker adaption logic comprises:

   determining an outlier distance of each said outlier data point (105) from its proximal classifying marker (101 or 102);
   comparing said each outlier distance with a proximity threshold; and
   repositioning, for said each outlier data point (105), its proximal classifying marker (101 or 102) to a position of said outlier data point (105) when said outlier distance is smaller than said proximity threshold.

3. The method of claim 2, wherein said proximity threshold is determined based on a reference range of said dataset (107) received by said data analysis system (301).

4. The method according to any of the preceding claims, wherein said classifying marker adaption logic comprises:

determining a frequency of occurrence of each of said datums (107A);
determining a datum (107A) with a maximum frequency of occurrence;
determining for each of said datums (107A) represented by each said outlier data point (105) a frequency ratio of their said frequency of occurrence and said determined maximum frequency of occurrence;
comparing, for said each outlier data point (105), said frequency ratio with a predefined frequency threshold; and
repositioning, for said each outlier data point (105), its proximal classifying marker (101 or 102) to a position of said each outlier data point (105) when its said frequency ratio is greater than or equal to said predetermined frequency threshold.

5. The method according to any of the preceding claims, wherein said classifying marker adaption logic comprises:

determining a spread for each said outlier data point (105) as a number of outlier data points (105) positioned at a distance greater than that of said each outlier data point from a proximal classifying marker (101 or 102);
comparing said spread with a predefined spread threshold; and
repositioning, for said each outlier data point (105), said proximal classifying marker (101 or 102) to a position of said outlier data point (105) having said spread greater than said predefined spread threshold.

6. The method according to any of the preceding claims, wherein said classifying marker adaption logic comprises:

generating, for each said outlier data point (105), an auxiliary statistical data model (100A) of a subset (502) of said received dataset (107), wherein said subset (502) comprises a predefined number of said datums (107A) positioned proximal to said one or more datums (107A) represented by said outlier data point (105), and wherein said auxiliary statistical data model (100A) comprises auxiliary classifying markers (101A, 102A) defining an auxiliary cluster (106A) of data points (105) representing one or more of said datums (107A) in said subset (502); and
repositioning, for said each outlier data point (105), its proximal classifying marker (101 or 102) to a position of said outlier data point (105) in said statistical data model (100) when said auxiliary cluster (106A) comprises said outlier data point (105).

7. A data analysis system (301) for analyzing data, said data analysis system (301) comprising:

a non-transitory computer readable storage medium (404) storing computer program instructions defined by modules of said data analysis system (301);
at least one processor (401) communicatively coupled to said non-transitory computer readable storage medium (404), said at least one processor (401) executing said defined computer program instructions; and
said modules of said data analysis system (301) comprising:

a data reception module (304) configured to receive a dataset (107) ;
a model generation module (307C) configured to generate a statistical data model (100) based on said received dataset (107), said statistical data model (100) comprising a plurality of data points (105) each representing one or more datums (107A) of said dataset (107), and classifying markers (101, 102) defining a cluster (106) of said data points (105), each of said classifying markers (101, 102) at a predetermined distance from a lower quartile (103) and an upper quartile (104) of said dataset (107);
a designation module (306) configured to designate each of said data points (105) inside said cluster (106) as an inlier data point (105) and each of said data points (105) outside said cluster as an outlier data point (105);

said modules of said data analysis system (301) **characterized by**:

an adaption module (307) configured to dynamically adapt said classifying markers (101, 102).

8.  The data analysis system (301) of claim 7, wherein said adaption module (307) comprises:

    an outlier distance determination module (307A) configured to determine an outlier distance of each said outlier data point (105) from its proximal classifying marker (101 or 102);
    a comparison module (307B) configured to compare said each outlier distance with a proximity threshold; and
    a marker modification module (307C) configured to reposition, for said each outlier data point (105), its proximal classifying marker (101 or 102) to a position of said outlier data point (105), when said outlier distance is smaller than said proximity threshold.

9.  The data analysis system (301) of claim 8, further comprising a threshold determination module (307D) configured to determined said proximity threshold based on a reference range of said dataset (107) received by said data reception module (304).

10. The data analysis system (301) according to any of the preceding claims, wherein said adaption module (307) comprises:

    a frequency determination module (307E) configured to determine a frequency of occurrence of each of said datums (107A);
    said frequency determination module (307E) further configured to determine a datum (107A) with a maximum frequency of occurrence;
    said frequency determination module (307E) further configured to determine for each of said datums (107A) represented by each said outlier data point (105) a frequency ratio of their said frequency of occurrence and said determined maximum frequency of occurrence;
    said comparison module (307B) further configured to compare, for said each outlier data point (105), said frequency ratio with a predefined frequency threshold; and
    said marker modification module (307C) configured to reposition, for said each outlier data point (105), its proximal classifying marker (101 or 102) to a position of said each outlier data point (105) when its said frequency ratio is greater than or equal to said predetermined frequency threshold.

11. The data analysis system (301) according to any of the preceding claims, wherein said adaption module (307) comprises:

    a spread determination module (307F) configured to determine a spread for each said outlier data point (105) as a number of outlier data points (105) positioned at a distance greater than that of said each outlier data point from a proximal classifying marker (101 or 102);
    said comparison module (307B) further configured to compare said spread with a predefined spread threshold; and
    said marker modification module (307C) further configured to reposition, for said each outlier data point (105), said proximal classifying marker (101 or 102) to a position of said outlier data point (105) having said spread greater than said predefined spread threshold.

12. The data analysis system (301) according to any of the preceding claims, further comprising:

    said model generation module (307C) further configured to generate, for each said outlier data point (105), an auxiliary statistical data model (100A) of a subset (502) of said received dataset (107), wherein said subset (502) comprises a predefined number of said datums (107A) positioned proximal to said one or more datums (107A) represented by said outlier data point (105), and wherein said auxiliary statistical data model (100A) comprises auxiliary classifying markers (101A, 102A) defining an auxiliary cluster (106A) of data points (105) representing one or more of said datums (107A) in said subset (502); and
    said marker modification module (307C) further configured to reposition, for said each outlier data point (105), its proximal classifying marker (101 or 102) to a position of said outlier data point (105) in said statistical data model (100) when said auxiliary cluster (106A) comprises said outlier data point (105).

13. A computer program product comprising a non-transitory computer readable storage medium, said non-transitory computer readable storage medium (404) storing computer program codes that comprise instructions executable by at least one processor (401) for performing the method according to any of the claims 1-6.

## FIG 1

STATE OF THE ART

# FIG 2

# FIG 3

FIG 4

400

405

401

402

403

404

406

407

408

409

410

# FIG 5A

EP 3 156 941 A1

# FIG 5B

100

585

105B

102

580

D

105A

106

104

575

103

D

105A

101

570

O1

O2

105B

O3

O4

565

O5

FIG 5C

501

FIG 5D

502

107A

FIG 5E

Europäisches
Patentamt

European
Patent Office

Office européen
des brevets

## EUROPEAN SEARCH REPORT

Application Number

EP 15 18 9285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALI S. HADI ET AL: "Detection of outliers", WILEY INTERDISCIPLINARY REVIEWS: COMPUTATIONAL STATISTICS, vol. 1, no. 1, 1 July 2009 (2009-07-01), pages 57-70, XP055154974, ISSN: 1939-5108, DOI: 10.1002/wics.6 | 1,3,5, 7-9,11, 13 | INV. G06K9/62 |
| Y | * Algorithm BACON; page 63 - page 64 * ----- | 4,6,10, 12 | |
| Y | Charu C. Aggarwal: "Outlier analysis, Chapter 1: An introduction to outlier analysis", , 10 February 2013 (2013-02-10), pages 1-98, XP055195603, Retrieved from the Internet: URL:https://web.archive.org/web/2013021021 2057/http://charuaggarwal.net/outlierbook. pdf [retrieved on 2015-06-12] | 4,6,10, 12 | |
| A | * the whole document * ----- | 1,3,5, 7-9,11, 13 | |
| A | Charu C Aggarwal: "Outlier analysis , Chapter 4: Proximity-based outlier detection", 1 January 2013 (2013-01-01), OUTLIER ANALYSIS, SPRINGER, NEW YORK, NY [U.A.], PAGE(S) 101 - 133, XP002750855, ISBN: 978-1-4614-6396-2 * distance based, density based, clustering based outlier detection; adavntages and disadvantages explained; the whole document * ----- -/-- | 1-13 | |

**TECHNICAL FIELDS SEARCHED (IPC)**

G06K

The present search report has been drawn up for all claims

| Place of search | Date of completion of the search | Examiner |
|---|---|---|
| The Hague | 24 March 2016 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Varun Chandola ET AL: "Outlier Detection -A Survey Outlier Detection -A Survey", <br><br> 15 August 2007 (2007-08-15), XP55259997, Retrieved from the Internet: URL:http://citeseerx.ist.psu.edu/viewdoc/download?doi=10.1.1.108.8502&rep=rep1&type=pdf <br> * Sections 2.3, 6 to 8 and 12 * <br> ----- | 1-13 | |
| A | Hadley Wickham ET AL: "40 years of boxplots", <br><br> 29 November 2011 (2011-11-29), XP55260000, Retrieved from the Internet: URL:http://byrneslab.net/classes/biol607/readings/wickham_boxplots.pdf <br> * the whole document * <br> ----- | 1-13 | |

TECHNICAL FIELDS
SEARCHED     (IPC)

The present search report has been drawn up for all claims

| Place of search | Date of completion of the search | Examiner |
|---|---|---|
| The Hague | 24 March 2016 | Alecu, Teodor Iulian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)